# EUROPÄISCHE PATENTSCHRIFT

(11) **EP 0 542 006 B1**
(45) Veröffentlichungstag und Bekanntmachung des Hinweises auf die Patenterteilung: **08.03.1995**
(21) Anmeldenummer: 92118056.8
(22) Anmeldetag: 22.10.1992
(51) Int. Cl.: B23B 31/30

(54) **Betätigungsvorrichtung für einen Werkzeug- oder Werkstückspanner in einer Werkzeugmaschinenspindel**
Command device for the clamping of a workpiece or a tool in a machine-tool spindle
Dispositif de commande pour le serrage d'une pièce ou d'un outil sur une broche de machine-outil

(30) Priorität: 31.10.1991 DE 4136026
(43) Veröffentlichungstag der Anmeldung: 19.05.1993
(73) Patentinhaber: OTT-JAKOB GmbH & Co. Spanntechnik KG, 87663 Lengenwang (DE)
(72) Erfinder: Jung, Liebhard, W-8964 Nesselwang (DE); Heel, Helmut, W-8951 Lengenwang (DE)
(74) Vertreter: Liebau, Gerhard, Dipl.-Ing.

(56) Entgegenhaltungen:
- EP-A- 0 425 774
- US-A- 4 068 559

## Beschreibung

Die Erfindung betrifft eine Betätigungsvorrichtung für einen Werkzeug- oder Werkstückspanner in einer Werkzeugmaschinenspindel mit einer in der Spindel unter Wirkung eines Spannkrafterzeugers, insbesondere einer Federanordnung, in Spannrichtung axial verschiebbaren Spannstange, die an ihrem vom zu spannenden Teil abgewandten Ende einen fest mit ihr verbundenen Kopf aufweist, mit mindestens einer am Kopf vorgesehenen Verriegelungsfläche, deren Mantellinien mit der Spannstangenachse einen sich in Spannrichtung öffnenden spitzen Winkel einschließen, mit einer den Spannkopf umgebenden, gegenüber diesem in einem Gehäuse verschiebbar angeordneten Verriegelungshülse, die durch mehrere Verriegelungsfedern in Richtung ihrer Verriegelungsstellung belastet ist und die auf mehrere, an der Verriegelungsfläche anliegende Riegelkörper einwirkt, mit einer mit der Verriegelungshülse verbundenen, von einem Druckmedium beaufschlagbaren, im Gehäuse verschiebbaren Lüsekolbenanordnung, mittels welcher die Verriegelungshülse entgegen der Verriegelungsfederkraft in Entriegelungsstellung und der Kopf entgegen der Spannkraft des Spannkrafterzeugers in Lösestellung des Spanners bringbar ist, und mit einem Käfig mit mehreren radialen Durchbrechungen, in welchem jeweils ein Riegelkürper radial beweglich ist.

Bei einer derartigen bekannten Betätigungsvorrichtung (DE 80 14 064 U1) weist der Kopf der Spannstange eine Ringnut mit einer in Spannrichtung gegenüber der Spannstangenachse in einem Winkel von 45° konisch ansteigenden Nutflanke auf. Diese Nutflanke dient als Verriegelungsfläche und wirkt mit mehreren Kugeln zusammen, die in einem im Gehäuse stationär angeordneten Käfig radial beweglich gelagert sind. Die Verriegelungshülse ist als Hutkolben ausgebildet und gegenüber dem Kopf der Spannstange, der selbst als Kolben ausgebildet ist, abgedichtet. In den von der Verriegelungshülse und dem Kopf umgrenzten Raum kann Druckmedium eingeleitet werden. Die Verriegelungsfedern sind an der dem Kopf abgewandten Seite der Verriegelungshülse angeordnet und an einem das Gehäuse verschließenden Deckel abgestützt. Ihre Federkraft wirkt in Richtung auf den Kopf auf die Verriegelungshülse ein. Letztere weist an ihrem freien Rand im Bereich der Verriegelungskugeln eine konische Anlagefläche auf, die sich in Richtung zur Spannstange hin erweitert. Unter Wirkung der Verriegelungsfedern wird durch die konische Anlagefläche auf die Verriegelungskugeln ein radial nach innen gerichteter Druck ausgeübt, welcher die Kugeln in die Ringnut des Kopfes drückt, sobald die Ringnut am Ende des Spannvorganges in den Bereich der Verriegelungskugeln gelangt. Die Verriegelungskugeln werden dann durch die Anlagefläche der Verriegelungshülse an die Verriegelungsfläche angedrückt. Hierdurch ist der Kopf und damit auch die Spannstange gegenüber dem Gehäuse verriegelt. Wirken auf das Werkzeug Kräfte ein, die das Werkzeug aus der Werkzeugaufnahme der Spindel herauszuziehen versuchen und größer sind als die vom Spannkrafterzeuger erzeugte Spannkraft, dann verhindert diese Verriegelung das Herausziehen des Werkzeugschaftes aus der Werkzeugaufnahme. Die mechanische und automatische Verriegelung ist auch dann von Wichtigkeit, wenn als Spannkrafterzeuger ein mit Druckmittel beaufschlagter Kolben verwendet wird, denn hier wäre bei Ausfall des Druckes, beispielsweise beim Bruch einer Dichtung, keine Spannkraft mehr vorhanden und der Werkzeugspanner würde dann das Werkzeug freigeben und dieses könnte unkontrolliert aus der Spindel herausgeschleudert werden. Bei der beschriebenen bekannten Betätigungsvorrichtung erfolgt das gewollte Lösen des Werkzeug- oder Werkstückspanners dadurch, daß in den zwischen Verriegelungshülse und Kolben gebildeten Druckraum Druckmedium eingeleitet wird, wodurch zunächst die Verriegelungshülse entgegen der verhältnismäßig geringen Kraft der Verriegelungsfedern in Richtung von der Spannstange weg bewegt wird. Hierdurch gibt die Anlagefläche die Verriegelungskugeln zur Radialbewegung nach außen frei. Wird der Druck in dem Druckraum weiter erhöht, dann verschiebt er den als Kolben ausgebildeten Kopf entgegen der Kraft des Spannkrafterzeugers in Richtung zur Werkzeug- oder Werkstückaufnahme der Spindel, wodurch dann das Werkzeug oder Werkstück freigegeben und ausgestoßen wird. Bei dieser bekannten Betätigungsvorrichtung müssen alle Teile des Spanners selbst sowie auch die Werkzeugspindel und das Werkzeug mit hoher Präzision gefertigt sein. Nur dann, wenn alle Maße in Richtung der Spannstangenachse genau aufeinander abgestimmt sind, liegt nämlich die Ringnut am Ende des Spannvorganges im Bereich der Verriegelungskugeln, und nur dann können diese formschlüssig in die Ringnut eingreifen sowie an der Verriegelungsfläche zur Anlage kommen. Das Problem hierbei ist, daß der Spanner selbst, die Werkzeugmaschinenspindel und auch die Werkzeuge jeweils von verschiedenen Firmen hergestellt werden. Auch ist es üblich, an ein und derselben Spindel die unterschiedlichsten Werkzeuge, oft von verschiedenen Herstellern, einzusetzen. Wenn irgendwo Toleranzen nicht genau eingehalten wurden oder sich mehrere Toleranzen oder Herstellungsfehler addieren, dann kommt die Ringnut am Ende des Spannvorganges entweder überhaupt nicht in den Bereich der Verriegelungskugeln zu liegen, oder sie nimmt gegenüber diesen eine Stellung ein, in welcher die Verriegelungskugeln nicht mehr an der Verriegelungsfläche, sondern am Nutgrund anliegen. Im ersteren Fall wird die Verriegelungseinrichtung überhaupt nicht wirksam und im letzteren Fall könnte zumindest ein ungewolltes Lockern des Werkzeuges eintreten. Aus diesem Grund sind bei den bisher bekannten Betätigungsvorrichtungen bei der Montage des Werkzeug- oder Werkstückspanners jeweils umfangreiche Einstellarbeiten erforderlich, die jeweils jedoch dann in Frage gestellt sind, wenn mit Werkzeugen oder Werkstücken gearbeitet wird, die maßlich von dem bei der Einstellung verwendeten Werkzeug oder Werkstück abweichen.

Der Erfindung liegt daher die Aufgabe zugrunde, eine Betätigungsvorrichtung der eingangs erwähnten Art zu schaffen, deren Einzelteile aufgrund geringer Genauigkeitsanforderungen und aufgrund ihrer Ausgestaltung kostengünstig herstellbar sind, bei der die Verriegelungseinrichtung unabhängig von dem jeweiligen Spannweg immer wirksam wird und die deshalb auch keine genauen Einstellarbeiten erfordert.

Dies wird nach der Erfindung dadurch erreicht, daß der Winkel, den die Mantellinien mit der Spannstangenachse einschließen, kleiner ist als der Gleitreibungswinkel, daß der Käfig in die Verriegelungshülse integriert ist und daß die Durchbrechungen in der Verriegelungshülse vorgesehen sind, daß die Verriegelungshülse außen von einer im Gehäuse stationären Stützwand umgeben ist, an der sich die als Klemmkörper wirkenden Riegelkörper radial abstützen, daß die Verriegelungsfedern so angeordnet sind, daß sie eine in Spannrichtung gerichtete Federkraft erzeugen, und daß ein einziger, beim Lösevorgang nacheinander zunächst auf die Verriegelungshülse und dann auf den Kopf der Spannstange einwirkender Lösekolben vorgesehen ist.

Die Erfindung geht von dem Gedanken aus, die Verriegelung des Kopfes nicht formschlüssig, sondern klemmend, d.h. reibschlüssig, ähnlich wie bei einem Freilauf, vorzunehmen. Dank der erfindungsgemäßen Ausgestaltung kann die Verriegelung über einen sehr großen axialen Bereich des Spanners an beliebiger Stelle des Kopfes erfolgen. Dies hat wiederum den Vorteil, daß vor allem die Teile der Betätigungsvorrichtung, aber auch die Spindei und die hierin einzusetzenden Werkzeuge, geringere Herstellungsgenauigkeiten erfordern und infolgedessen kostengünstiger herstellbar sind. Bei den Einzelteilen der Betätigungsvorrichtung handelt es sich um wenige und relativ einfache Drehteile mit geringen Anforderungen an die. Oberflächengüte. Dies trägt ebenfalls zu einer Kostensenkung bei der Herstellung bei. Da die Verriegelung unabhängig vom jeweiligen Spannweg an beliebiger Stelle des Spannkopfes erfolgen kann, sind auch keine genauen Einstellarbeiten erforderlich.

Vorteilhafte Ausgestaltungen sind in den Unteransprüchen gekennzeichnet.

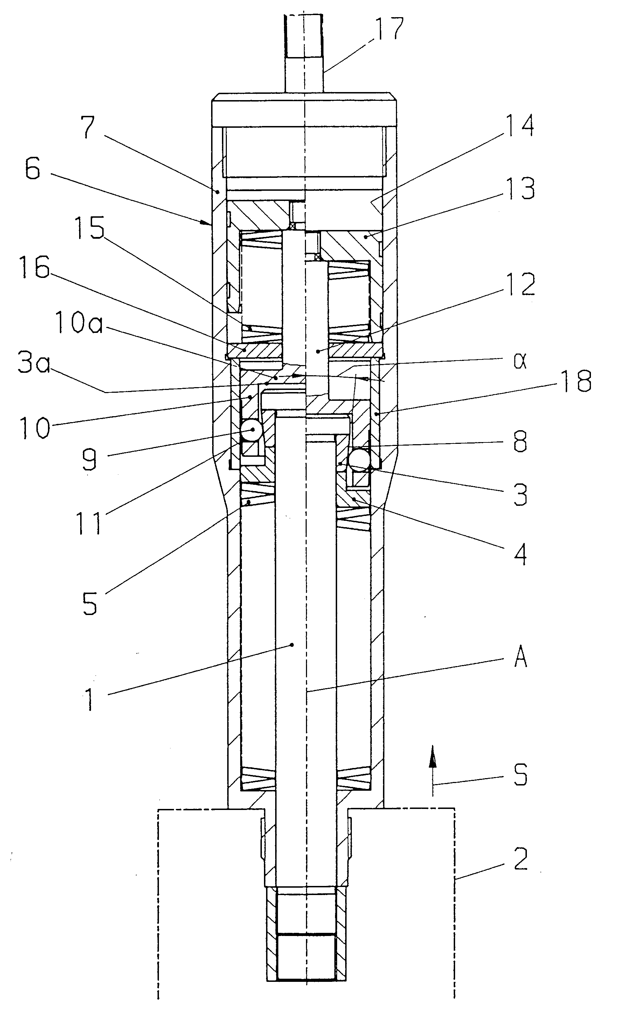

Die Erfindung wird in folgendem, anhand eines in der Zeichnung dargestellten Ausführungsbeispieles, näher erläutert.

Die Zeichnung zeigt einen Axialschnitt der Betätigungsvorrichtung, links in Spann- und Verriegelungsstellung, rechts in Lösestellung.

Der Werkzeug- oder Werkstückspanner weist in üblicher Weise eine Spannstange 1 auf, die sich durch eine Werkzeugmaschinenspindel 2 hindurch erstreckt. Die Spannstange 1 kann entweder einteilig, oder, wie es beim gezeigten Ausführungsbeispiel der Fall ist, mehrteilig ausgebildet sein. An ihrem vorderen, nicht dargestellten Ende ist die Spannstange 1 mit einer Spannzange verbunden, die beispielsweise an dem Anzugsbolzen eines in die Werkzeugaufnahme der Spindel 2 einzusetzenden Steilkegel-Werkzeuges angreift. An dem anderen, vom zu spannenden Teil abgewandten Ende der Spannstange 1 ist ein Kopf 3 angeordnet, der mit der Spannstange 1 fest verbunden ist. An diesem Kopf 3 stützt sich eine Druckscheibe 4 ab, auf welche ein Spannkrafterzeuger, beispielsweise in Form von Tellerfedern 5, einwirkt. Anstelle von Tellerfedern kann als Spannkrafterzeuger auch eine hydraulische Kolben-Zylinder-Einheit verwendet werden. Zur Betätigung des Werkzeug- oder Werkstückspanners ist eine Betätigungsvorrichtung 6 vorgesehen, die von einem Gehäuse 7 umschlossen ist. Dieses Gehäuse 7 ist fest in die Spindel 2 eingeschraubt. Es kann, wie beim gezeigten Ausführungsbeispiel auch den Spannkrafterzeuger 5 umschließen. Gegebenenfalls kann aber der Spannkrafterzeuger auch unmittelbar in der Spindel 2 eingebaut werden, so daß das Gehäuse 7 dann im Bereich zwischen der Druckscheibe 4 und dem Kopf 3 endet. Unter Wirkung des Spannkrafterzeugers 5 wird die Spannstange 1 in Richtung der Spannstangenachse A, nämlich in Spannrichtung 5, verschoben.

Der Kopf 3 weist eine Verriegelungsfläche 8, beispielsweise in Form einer Konusfläche auf. Mit dieser konischen Verriegelungsfläche 8 wirken mehrere Riegelkörper 9 in Form von Kugeln zusammen. Die Verriegelungsfläche 8 kann gegebenenfalls auch durch mindestens zwei gegenüberliegende Keilflächen gebildet sein, wobei dann die Riegelkörper vorzugsweise als Zylinderrollen ausgebildet sind. Eine derartige Ausgestaltung hat den Vorteil einer geringen Flächenpressung. Der Kopf 3 ist ferner von einer becherförmig ausgestalteten Verriegelungshülse 10 umgeben, die einen Boden 10a aufweist. Die Verriegelungshülse 10 weist mehrere radiale Durchbrechungen 11, beispielsweise in Form von Bohrungen auf. In jeder dieser Durchbrechungen 11 ist einer der Riegelkörper 9 radial beweglich angeordnet. Die Verriegelungshülse 10 dient somit auch als Käfig zur Halterung der Riegelkörper 9.

Der Boden 10a der Verriegelungshülse 10 ist über eine Kolbenstange 12 mit einem Lösekolben 13 verbunden. Dieser ist in einem Zylinderraum 14 des Gehäuses 7 axial verschiebbar. Mehrere Verriegelungsfedern 15, beispielsweise in Form von Tellerfedern, die jedoch eine wesentlich geringere Federkraft aufweisen als die Tellerfedern des Spannkrafterzeugers 5, sind zwischen der Verriegelungshülse 10 und dem Lösekolben 13 angeordnet. Die Verriegelungsfedern 15 stützen sich dabei einerseits an dem Lösekolben 13 und andererseits an einer die Kolbenstange 12 umgebenden Widerlagerplatte 16 ab, die ihrerseits axial im Gehäuse 7 abgestützt ist. Über einen Anschlußstutzen 17 kann Druckmedium in den Zylinderraum 14 eingeleitet werden.

Die Verriegelungshülse 10 ist ferner außen von einer im Gehäuse 7 stationären Stützwand 18 umgeben, an der sich die Riegelkörper 9 abstützen. Die Stützwand 18 besteht aus gehärtetem Material und ist beim gezeigten Ausführungsbeispiel als zur Verriegelungshülse 10 konzentrische Hülse ausgebildet.

Da die nach der Erfindung vorgesehene Verriegelung klemmend, d.h. reibschlüssig arbeitet, ist es wichtig, daß der Winkel α, den die Mantellinien der Verriegelungsfläche 8 mit der Spannstangenachse A einschließen, kleiner ist als der Gleitreibungswinkel ρ. Bekanntlich entspricht der Tangens des Gleitreibungswinkels ρ der Gleitreibungszahl ». Da es sich hier um eine Reibung von Stahl auf Stahl handelt, sollte der Winkel α gleich oder kleiner 6° sein.

Geht man davon aus, daß sich die Betätigungsvorrichtung zunächst in ihrer in der Zeichnung rechts dargestellten Lösestellung befindet, dann wird der Lösekolben 13 durch den im Zylinderraum 14 anstehenden Druck entgegen der Kraft des Spannkrafterzeugers 5 in dieser Lösestellung gehalten. Die Spannstange 1 ist in Richtung zur Werkstück- oder Werkzeugaufnahme hin verschoben und die nicht dargestellte Spannzange geöffnet. Wird der Druck im Zylinderraum 14 allmählich verringert, dann wird die Spannstange 1 unter Wirkung des Spannkrafterzeugers in Richtung S verschoben. Hierdurch schließt sich zunächst die Spannzange und die Spannstange 1 zieht anschließend das Werkzeug mit großer Kraft in die Werkzeugaufnahme der Spindel 2. Wenn das Werkzeug vollständig in die Werkzeugaufnahme eingezogen ist, kommt die Spannstange 1 zum Stillstand und ihr Kopf 3 nimmt dann die in der Zeichnung links dargestellte Spannstellung ein. Unter Wirkung der Verriegelungsfedern 15 wird der Lösekolben 13 anschließend noch weiter nach oben gedrückt und nimmt über die Kolbenstange 12 die Verriegelungshülse 10 in Spannrichtung S mit. Die sich außen an der Stützwand 18 abstützenden Riegelkörper 9 werden hierdurch klemmend an die Verriegelungsfläche 8 des Kopfes 3 angedrückt. Das ganze Spannsystem ist nun gegen ungewolltes Lösen verriegelt. Wirken auf das Werkzeug entgegen der Spannrichtung S gerichtete Kräfte ein, die höher sind als die Spannkraft des Spannkrafterzeugers 5, dann verhindern die Riegelkörper 9 nach einem kurzen Weg entgegen der Spannrichtung S, der kleiner ist als 0,01 mm, eine weitere Bewegung des Kopfes 3 und damit der Spannstange entgegen der Spannrichtung S. Durch den Reibschluß zwischen den Riegelkörpern 9 an der Verriegelungsfläche 8 einerseits und der Stützwand 18 andererseits, ist somit der Kopf 3 und damit auch die Spannstange 1 in Spannstellung sicher verriegelt. Entscheidend hierbei ist auch, daß die Verriegelung des Kopfes 3 an jedem beliebigen Punkt seines Spannweges erfolgen kann. Besonders vorteilhaft ist die wirksame Verriegelung auch dann, wenn anstelle von Tellerfedern als Spannkrafterzeuger ein hydraulischer Spannkrafterzeuger verwendet wird. Es kann nämlich während des Laufes der Spindel 2 beispielsweise infolge von Bruch einer Dichtung die Spannkraft ausfallen, wodurch sich dann bei nicht vorhandener Verriegelung die Spannstange 1 in ihre Lösestellung bewegen könnte und das Werkzeug freigegeben würde und sich von der Spindel 2 lösen könnte.

Zum gewollten Lösen des Werkzeugspanners wird das im Zylinderraum 14 befindliche Druckmedium wiederum unter Druck gesetzt, wodurch zunächst der Lösekolben 13 entgegen der Kraft der schwächeren Verriegelungsfedern 15 gemäß der Zeichnung nach unten gedrückt wird. Hierdurch wird die Verriegelungshülse 10 nach unten geschoben und zunächst die Klemmung der Riegelkörper 9 aufgehoben. Bei weiterer Bewegung des Lösekolbens 13 nach unten kommt der Boden 10a der Verriegelungshülse 10 am freien Ende 3a des Kopfes 3 zur Anlage. Hierdurch wird nunmehr die Spannstange 1 entgegen der Kraft des Spannkrafterzeugers 5 in Richtung zur Werkzeugaufnahme der Spindel 2 gedrückt, wodurch sich die Spannzange öffnet. Ein in der Spannzange vorgesehener Ausstoß-Ansatz kommt schließlich am Anzugsbolzen zur Anlage, wodurch schließlich das Werkzeug ausgestoßen wird.

Obwohl zweckmäßig Riegelkörper in Form von Kugeln oder Zylinderrolien verwendet werden, da es sich hierbei um handelsübliche Teile handelt, könnten die Riegelkörper auch eine andere Form, beispielsweise die von Segmenten, aufweisen.

## Patentansprüche

1. Betätigungsvorrichtung für einen Werkzeug- oder Werkstückspanner in einer Werkzeugmaschinenspindel mit einer in der Spindel (2) unter Wirkung eines Spannkrafterzeugers (5), insbesondere einer Federanordnung, in Spannrichtung axial verschiebbaren Spannstange (1), die an ihrem vom zu spannenden Teil abgewandten Ende einen fest mit ihr verbundenen Kopf (3) aufweist, mit mindestens einer am Kopf (3) vorgesehenen Verriegelungsfläche (8), deren Mantellinien mit der Spannstangenachse einen sich in Spannrichtung öffnenden spitzen Winkel einschließen, mit einer den Kopf umgebenden, gegenüber diesem in einem Gehäuse (7) verschiebbaren Verriegelungshülse (10), die durch mehrere Verriegelungsfedern in Richtung ihrer Verriegelungsstellung belastet ist und die auf mehrere an der Verriegelungsfläche (8) anliegende Riegelkörper (9) einwirkt, mit einer mit der Verriegelungshülse (10) verbundenen, von einem Druckmedium beaufschlagbaren, im Gehäuse (7) vorgesehenen Lösekolbenanordnung, mittels welcher die Verriegelungshülse (10) entgegen der Verriegelungsfederkraft in Entriegelungsstellung und der Kopf (3) entgegen der Spannkraft des Spannkrafterzeugers (5) in Lösestellung des Spanners bringbar ist, und mit einem Käfig mit mehreren radialen Durchbrechungen (11), in welchen jeweils ein Riegelkörper (9) radial beweglich ist, **dadurch gekennzeichnet,** daß der Winkel (α), den die Mantellinien mit der Spannstangenachse (A) einschließen, kleiner ist als der Gleitreibungswinkel (ρ), daß der Käfig in die Verriegelungshülse (10) integriert ist und daß die Durchbrechungen (11) in der Verriegelungshülse vorgesehen sind, daß die Verriegelungshülse außen von einer im Gehäuse (7) stationären Stützwand (18) umgeben ist, an der sich die als Klemmkörper wirkenden Riegelkörper (9) radial abstützen, daß die Verriegelungsfedern (15) so angeordnet sind, daß sie eine in Spannrichtung (S) gerichtete Federkraft erzeugen, und daß ein einziger, beim Lösevorgang nacheinander zunächst auf die Verriegelungshülse (10) und dann auch auf den Kopf (3) der Spannstange (1) einwirkender Lösekolben (13) vorgesehen ist.

2. Vorrichtung nach Anspruch 1, **dadurch gekennzeichnet,** daß die Verriegelungsfedern (15) zwischen der Verriegelungshülse (10) und dem mit ihr über eine Kolbenstange (12) verbundenen Lösekolben (13) angeordnet sind und an einer die Kolbenstange (12) umgebenden, im Gehäuse (7) abgestützten Widerlagerplatte (16) anliegen.

3. Vorrichtung nach Anspruch 1 oder 2, **dadurch gekennzeichnet,** daß die Verriegelungshülse (10) becherförmig ausgebildet ist und einen mit der Kolbenstange (12) verbundenen Boden (10a) aufweist, der nach dem Lösen der Verriegelung an dem freien Ende (3a) des Kopfes (3) zur Anlage kommt.

4. Vorrichtung nach einem der Ansprüche 1 bis 3, **dadurch gekennzeichnet,** daß die Verriegelungsfläche (8) eine Konusfläche ist und daß die Riegelkörper (9) Kugeln sind.

5. Vorrichtung nach Anspruch 1, **dadurch gekennzeichnet,** daß die Verriegelungsfläche (8) durch mindestens zwei gegenüberliegende Keilflächen gebildet ist und daß die Riegelkörper (9) Zylinderrollen sind.

## Claims

1. Actuating device for a tool or workpiece clamping means in a machine tool spindle with a tension rod (1) axially movable in the clamping direction in the spindle (2) under the action of a grip generator (5), more particularly a spring arrangement, said tension rod (1) having at its end facing away from the clamping portion a head (3) securely connected therewith, with at least one locking face (8) provided on the head (3), and whose surface lines enclose with the axis of the tension rod an acute angle opening in the clamping direction, with a locking sleeve (10) surrounding the head and displaceable relative thereto in a casing (10), said locking sleeve (10) being urged by a plurality of locking springs in the direction of its locked position, and which acts upon a plurality of locking members (9) abutting against the locking face (8), with a release piston arrangement connected to the locking sleeve (10) and chargeable with a pressure medium, and provided in the casing (7), by means of which the locking sleeve (10) may be brought contrary to the force of the locking springs into an unlocked position, and the head (3) may be brought contrary to the clamping force of the grip generator (5) into the released position of the clamping means, and with a cage with a plurality of radial apertures (11) in which a respective locking member (9) is radially movable, characterised in that the angle (α) enclosed by the surface line with the axis (A) of the tension rod, is smaller than the angle (ρ) of sliding friction, in that the cage is integrated into the locking sleeve. (10) and that the apertures (11) are provided in the locking sleeve, in that the locking sleeve is externally surrounded by a support wall (18), stationary in the casing (7), and upon which the locking members (9), acting as clamping members, are radially supported, in that the locking springs (15) are so disposed that they generate a spring force aligned in the clamping direction (S), and in that a single release piston (13) is provided, acting in sequence during the release procedure, firstly upon the locking sleeve (10) and then also on the head (3) of the tension rod (1).

2. Device according to Claim 1 characterised in that the locking springs (15) are disposed between the locking sleeve (10) and the release piston (13) connected therewith by a piston rod (12) and abut against an abutment plate (16) supported in the casing (7) surrounding the piston rod (12).

3. Device according to Claim 1 or 2, characterised in that the locking sleeve (10) is cup-shaped and has a base (10a) connected to the piston rod (12) and which, after release of the locking system, comes into contact with the free end (3a) of the head (3).

4. Device according to Claims 1-3, characterised in that the locking face (8) is a conical face, and in that the locking members (9) are balls.

5. Device according to Claim 1, characterized in that the locking face (8) is formed by at least two mutually- opposed ramp surfaces, and in that the locking members (9) are cylindrical rollers.

## Revendications

1. Dispositif d'actionnement pour un dispositif de serrage d'un outil ou d'une pièce dans une broche de machine-outil, comprenant une tige de serrage (1) qui peut être déplacée axialement dans la broche (2) dans la direction du serrage sous l'effet d'un dispositif engendrant une force de serrage (5), et en particulier d'un dispositif à ressort, et qui, à son extrémité opposée à la partie à serrer, présente une tète (3) reliée à elle d'une manière rigide, comprenant au moins une surface de verrouillage (8) qui est prévue sur la tête (3) et dont les génératrices forment avec l'axe de la tige de serrage un angle aigu s'ouvrant dans la direction du serrage, comprenant un manchon de verrouillage (10) qui entoure la tète, qui peut être déplacé par rapport à celle-ci dans un carter (7), qui est rappelé dans la direction de sa position de verrouillage par plusieurs ressorts de verrouillage et qui agit sur plusieurs organes de verrouillage (9) portant sur la surface de verrouillage (8), comprenant un dispositif à piston de desserrage qui est relié au manchon de verrouillage (10), qui peut être soumis à l'action d'un fluide hydraulique, qui est prévu dans le carter (7) et au moyen duquel le manchon de verrouillage (10) peut être amené dans la position de déverrouillage à l'encontre de la force élastique de verrouillage et la tête (3) peut être amenée dans la position de déblocage du dispositif de serrage à l'encontre de la force de serrage du dispositif engendrant une force de serrage (5), et comprenant une cage pourvue de plusieurs passages radiaux (11) dans chacun desquels un organe de verrouillage (9) est mobile radialement, caractérisé par le fait que l'angle (α) que les génératrices forment avec l'axe (A) de la tige de serrage est inférieur à l'angle de frottement par glissement (ρ), par le fait que la cage est intégrée au manchon de verrouillage (10) et que les passages (11) sont prévus dans le manchon de verrouillage, par le fait que le manchon de verrouillage est entouré extérieurement par une paroi d'appui (18) qui est fixe dans le carter (7) et sur laquelle s'appuient radialement les organes de verrouillage (9) servant d'organes de serrage, par le fait que les ressorts de verrouillage (15) sont disposés de manière à engendrer une force élastique dirigée dans la direction du serrage (S), et par le fait qu'il est prévu un piston de déblocage unique (13) qui, lors de l'opération de déblocage, agit successivement sur le manchon de verrouillage (10), dans un premier temps, puis aussi sur la tête (3) de la tige de serrage (1).

2. Dispositif selon la revendication 1, caractérisé par le fait que les ressorts de verrouillage (15) sont disposés entre le manchon de verrouillage (10) et le piston de déblocage (13) qui lui est relié par l'intermédiaire d'une tige de piston (12), et qu'ils portent sur une plaque formant contre-appui (16) qui entoure la tige de piston (12) et qui est en appui dans le carter (7).

3. Dispositif selon la revendication 1 ou 2, caractérisé par le fait que le manchon de verrouillage (10) est réalisé en forme de godet, et qu'il présente un fond (10a) qui est relié à la tige de piston (12) et qui vient en butée sur l'extrémité libre (3a) de la tête (3) après que le verrouillage a été débloqué.

4. Dispositif selon l'une des revendications 1 à 3, caractérisé par le fait que la surface de verrouillage (8) est une surface conique, et par le fait que les organes de verrouillage (9) sont des billes.

5. Dispositif selon la revendication 1, caractérisé par le fait que la surface de verrouillage (8) est constituée par au moins deux surfaces opposées en forme de coins, et par le fait que les organes de verrouillage (9) sont des rouleaux cylindriques.
